(19) Europäisches Patentamt
European Patent Office
Office européen des brevets

(11) Veröffentlichungsnummer: **0 362 514 B1**

(12) # EUROPÄISCHE PATENTSCHRIFT

(45) Veröffentlichungstag der Patentschrift: **20.04.94**

(51) Int. Cl.5: **C08F 297/04**, C08G 81/02

(21) Anmeldenummer: **89114421.4**

(22) Anmeldetag: **04.08.89**

(54) **Ungesättigte, elastomere, asymmetrisch gekuppelte Blockcopolymere, ein Eintopfverfahren zu ihrer Herstellung und ihre Verwendung zur Herstellung von Reifenbauteilen.**

(30) Priorität: **05.10.88 DE 3833760**

(43) Veröffentlichungstag der Anmeldung:
**11.04.90 Patentblatt 90/15**

(45) Bekanntmachung des Hinweises auf die Patenterteilung:
**20.04.94 Patentblatt 94/16**

(84) Benannte Vertragsstaaten:
**AT BE CH DE ES FR GB IT LI LU NL SE**

(56) Entgegenhaltungen:
**EP-A- 0 128 607**

(73) Patentinhaber: **HÜLS AKTIENGESELLSCHAFT**

**D-45764 Marl(DE)**

(72) Erfinder: **Hellermann, Walter, Dr.**
**Waldstrasse 16**
**D-4270 Dorsten 21(DE)**
Erfinder: **Herrmann, Christoph, Dr.**
**Siedlungsstrasse 3**
**D-4370 Marl(DE)**
Erfinder: **Nordsiek, Karl-Heinz, Dr.**
**Neumarkstrasse 4**
**D-4370 Marl(DE)**
Erfinder: **Wolpers, Jürgen, Dr.**
**Hetfeld 15 c**
**D-4358 Haltern(DE)**
Erfinder: **Fuchs, Hans-Bernd, Dr.**
**Leverkusener Strasse 12**
**D-4370 Marl(DE)**

EP 0 362 514 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind neue asymmetrisch gekuppelte Blockcopolymere, ein Eintopfverfahren zu ihrer Herstellung und ihre Verwendung zur Herstellung von Reifenbauteilen.

Es ist generell bekannt, daß die Eigenschaften eines Kautschukes ganz wesentlich durch den Verlauf der tan Delta-Kurve bestimmt werden. Es ist auch bekannt, daß sich ein breiter Peak in der tan Delta-Kurve auf eine Reihe von antagonistischen Kautschukeigenschaften wie Erhöhung des Rutschwiderstands, Verminderung der dynamischen Wärmebildung und Erniedrigung des Rollwiderstands ohne Verminderung des Abriebs bei gleichzeitiger Ganzjahrestauglichkeit günstig auswirkt.

Es hat in der Vergangenheit zahllose Versuche gegeben, Kautschuke mit einem hohen Eigenschaftsniveau zu entwickeln. Um einen möglichst günstigen Kompromiß zwischen den sich teilweise gegensätzlich verhaltenden Eigenschaften zu finden, hat man Mischungen aus unterschiedlichen Kautschuken eingesetzt. Ein weiterer Lösungsweg bestand darin, Copolymere aus 2 unterschiedlichen Blöcken herzustellen. So sind Copolymere bekannt, die sich in der Art ihrer chemischen Zusammensetzung und/oder ihrem strukturellen Aufbau unterscheiden. Beispielhaft seien Styrol-Butadien-Blockcopolymere erwähnt, deren Blöcke A und B sich in ihrem Styrol- und/oder Vinylgehalt unterscheiden. Derartige Copolymere sind vergleichsweise schlecht verarbeitbar.

Eine weitere Möglichkeit, die Kautschukeigenschaften zu beeinflussen und insbesondere den kalten Fluß zu verbessern, besteht darin, die zu Ende der Polymerisation vorhandenen, sogenannten "living polymers" mit polyfunktionellen Kupplungsmitteln wie Polyhalogeniden oder polyalkenylaromatischen Verbindungen zu kuppeln. Allerdings ist die Kupplungsausbeute, d. h. der Prozentsatz an gekuppelten Produkten im Verhältnis zur Gesamtmenge an Polymerisaten, vielfach nur sehr gering. Man erhält nach diesem Prinzip stets Kupplungsprodukte, deren Arme - im Hinblick auf Molekulargewicht, Zusammensetzung und Struktur - identisch sind.

Es sind zwar grundsätzlich auch Kupplungsprodukte mit unterschiedlichen Armen bekannt, aber diese Produkte enthalten durchweg Blöcke, die aus Styrol- oder Butadieneinheiten bestehen. Darüberhinaus sind thermoplastische Kupplungsprodukte mit unterschiedlichen Armen bekannt. Es gibt bisher keinen Hinweis, daß diese Produkte im Reifensektor Anwendung finden könnten.

Beispielsweise sind aus der US-A-4 248 983 thermoplastische, sternförmige Blockcopolymere der allgemeinen Formel

$$(A - B/A')_m - X - (A'/B)_n$$

bekannt, die 60 bis 95 % Styrol und 40 bis 5 % eines konjugierten Diens enthalten. In der allgemeinen Formel steht A für ein nichtelastomeres Polymersegment, das 80 bis 90 % Styrol enthält. A'/B und B/A' bedeuten elastomere Polymersegmente auf Basis von Styrol und eines konjugierten Diens. Diese Produkte werden hergestellt, indem man das nichtelastomere Segment A polymerisiert, einen Initator zusetzt, die Reaktion durch Polymerisation eines Gemisches aus Styrol und einem Dien fortsetzt und schließlich eine Kupplung durchführt. Ähnliche Blockcopolymere sind aus den US-A-4 180 530, 4 221 884 und 4 248 980 bis 4 248 984 bekannt.

Aus der US-A-4 391 949 sind Beschichtungszusammensetzungen auf Basis sternförmiger Blockpolymerer der allgemeinen Formel

$$(A - B)_x - Y - (C)_z$$

bekannt. Hierin ist Y ein Kupplungsmittel, A das Polymere einer monovinylaromatischen Verbindung, also beispielsweise ein Polystyrolblock, und B und C Polymere von konjugierten Dienen, beispielsweise Polybutadienblöcke. Die beiden Polymeren A - B und C werden zunächst in 2 getrennten Reaktoren hergestellt. Danach werden die Inhalte beider Reaktoren vereinigt und das Kupplungsmittel zugesetzt.

Allen bekannten Blockcopolymeren haftet mindestens einer der folgenden Mängel an:

1. Die Blockcopolymeren werden den gestiegenen Anforderungen im Hinblick auf ihre Verwendung als Reifenmaterial nicht befriedigend gerecht.
2. Es treten Probleme in der Verträglichkeit der beiden Blöcke auf.
3. Die tan Delta-Kurve weist nur ein schmales Dämpfungsmaximum auf.

Ziel der vorliegenden Erfindung war es, neuartige sternförmige Kautschuke bereit zu stellen, die sich durch eine tan Delta-Kurve mit möglichst breitem Schwingungsdämpfungsbereich auszeichnen.

Es wurde jetzt ein neues Prinzip der Verknüpfung von Kautschuken aufgefunden. Damit gelingt es, deutlich verbreiterte tan Delta-Kurven zu erhalten (siehe Abbildung 1). Da auf diese Weise bekanntlich die

Kautschukeigenschaften positiv beeinflußt werden können, wird dem Reifenfachmann ein neuer Parameter zur Optimierung der Reifeneigenschaften zur Verfügung gestellt. Die neuen Kautschuke zeichnen sich darüber hinaus durch die bekannten Vorteile gekuppelter Kautschuke (vgl. EP-A-0 090 365) sowie hochvinylhaltiger Kautschuke (K. H. Nordsiek, K. M. Kiepert, Kautschuk und Gummi, Kunststoffe 35, 371 (1982) aus. Die styrolhaltigen Kautschuke weisen eine statistische Verteilung der Styroleinheiten auf. Der Anteil an Blockpolystyrolanteilen liegt unter 2 %.

Das Eintopfverfahren zur Herstellung der neuen Kautschuke, das Teil der vorliegenden Erfindung ist, garantiert eine hohe Kupplungsausbeute.

Gegenstand der Erfindung sind ungesättigte, elastomere, asymmetrisch gekuppelte Blockcopolymere der allgemeinen Formel
$(A\text{-}B)_n$ - X - $(B)_m$, auf Basis von Butadien und gegebenenfalls Isopren und Styrol, die vorzugsweise 40 bis 90 % Butadien, 0 bis 40 % Isopren und 0 bis zu 30 % Styrol enthalten. X ist der Rest eines polyfunktionellen Kupplungsmittels. Die Zahl m ist mindestens ebenso groß wie n. Die Summe von m und n soll einerseits mindestens 3 und andererseits höchstens 25 sein. Die Blöcke A machen vorzugsweise 40 bis 80 %, die Blöcke B entsprechend 60 bis 20 % aller Blöcke im Blockcopolymeren aus. Die Blöcke A bestehen vorzugsweise ausschließlich aus Butadieneinheiten, deren Vinylgruppengehalt zwischen 8 und 60 % liegt. Die Blöcke B sind zu 0 bis 60 % aus Butadieneinheiten, zu mindestens 10 % aus Isopreneinheiten und zu maximal 45 % aus Styroleinheiten aufgebaut. Der Gehalt an Vinyl- und 3,4-Isopropenylgruppen - bezogen auf Block B - liegt zwischen 75 und 90 %.

Gegenstand der Erfindung ist auch ein Eintopfverfahren zur Herstellung der neuen Blockcopolymeren durch Polymerisation der Monomeren in einem inerten organischen Lösemittel in Gegenwart einer monofunktionellen Li-Verbindung. Dieses Verfahren besteht darin, daß man zunächst unter Katalysatorzugabe den Block A herstellt, nach erneuter Katalysator-und Monomerzugabe in Gegenwart eines geeigneten Cokatalysators den Block B herstellt und schließlich eine Kupplung durchführt.

Bei dem vorliegenden Verfahren entstehen ganz überwiegend die erfindungsgemäßen asymmetrisch gekuppelten Blockcopolymeren. Grundsätzlich können bei dem vorliegenden Verfahren auch symmetrisch gekuppelte Blockcopolymere entstehen. Aus Untersuchungen der Anmelderin geht jedoch hervor, daß der Anteil dieser Produkte sehr gering ist. Aus diesem Grunde ist in der vorliegenden Anmeldung stets nur von den asymmetrisch gekuppelten Produkten die Rede.

Der Gegenstand der vorliegenden Erfindung unterscheidet sich vom Gegenstand der am gleichen Tage hinterlegten Patentanmeldung der gleichen Inhaberin mit dem Titel "Ungesättigte, elastomere, asymmetrisch gekuppelte Blockcopolymere, ein Zweitopfverfahren zu ihrer Herstellung und ihre Verwendung zur Herstellung von Reifenbauteilen" vor allem in folgenden Punkten:

1. Das erfindungsgemäße Blockcopolymere weist die Formel $(AB)_n$-X-$(B)_m$, das Blockcopolymere der zitierten Anmeldung dagegen $(A)_n$-X-$(B)_m$.
2. Die erfindungsgemäßen Blockcopolymeren werden gemäß Anspruch 5 durch ein Eintopfverfahren hergestellt, die Blockcopolymeren der zitierten Anmeldung dagegen durch ein Zweitopfverfahren.

Im folgenden soll das Verfahren detailliert beschrieben werden.

Als Reaktionsmedium wird ein inertes organisches Lösemittel verwendet. Geeignet sind insbesondere Kohlenwasserstoffe mit 5 bis 12 C-Atomen wie Pentan, Hexan, Heptan, Oktan und Dekan sowie deren cyclische Analogen. Geeignet sind auch aromatische Lösemittel wie z. B. Benzol, Toluol, Xylole u. a. Selbstverständlich können auch Gemische der vorstehend beschriebenen Lösemittel eingesetzt werden.

Als Katalysator werden Alkyllithiumverbindungen eingesetzt, die durch Umsetzung von Lithium mit den entsprechenden Alkylhalogeniden leicht zugänglich sind. Die Alkylreste weisen 1 bis 10 C-Atome auf. Einzelne Wasserstoffatome können durch Phenylreste substituiert sein. Folgende Alkyllithiumverbindungen sind besonders geeignet: Methyllithium, Ethyllithium, Pentyllithium; bevorzugt wird n-Butyllithium.

Der Katalysator wird zu Beginn der Polymerisation des Blockes A und des Blockes B zugesetzt. Darüber hinaus kann es vorteilhaft sein, während der Polymerisation des ersten Blockes eine geringe Katalysatormenge zuzusetzen.

Art und Menge des Katalysators werden im allgemeinen so ausgewählt, daß das erhaltene Blockcopolymerisat folgende Eigenschaften aufweist:
Mooney-Viskosität ($ML_{1-4}$, 100 °C, DIN 53 523): 35 bis 120;
Uneinheitlichkeit U = (Mw/Mn) - 1, bestimmt durch gelpermeationschromatografische Analyse (GPC-Analyse): 0,6 bis 4,0;
Defo-Elastizität(80 °C, DIN 53 514): ≧ 20;
Bei dem vorliegenden Verfahren wird der Block B in Anwesenheit eines Cokatalysators hergestellt. In diesem Falle ist man daran interessiert, Polymerisate mit einem möglichst hohen Anteil von 1,2- und/oder 3,4-Struktureinheiten zu erhalten.

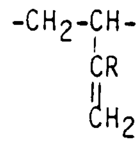

und/oder

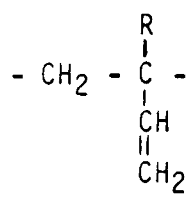

R = H (Butadien)
R = $CH_3$ (Isopren)

Die Auswahl der Cokatalysatoren richtet sich daher nach ihrer Fähigkeit, die lebenden Polymerenden zu erhalten und die Mikrostruktur zu regeln, d. h. den Verlauf der Polymerisation im Hinblick auf eine möglichst vollständige Bildung von 1,2- und/oder 3,4-Struktureinheiten zu lenken.

Geeignete Cokatalysatoren umfassen insbesondere Dialkylether des Ethylenglykols, deren Alkylgruppen jeweils bis zu 4 C-Atome aufweisen, wie z. B. Ethylenglykoldiethylether (DEE).

Bevorzugt werden Ether der allgemeinen Formel

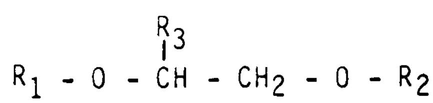

wobei $R_1$ und $R_2$ Alkylreste mit einer unterschiedlichen Zahl von C-Atomen aus der Gruppe Methyl, Ethyl, n- und iso-Propyl sowie n-, iso-, sek.- und tert. Butyl sind und $R_3$ Wasserstoff, Methyl oder Ethyl bedeutet. Vorzugsweise beträgt die Summe der C-Atome der beiden Reste $R_1$ und $R_2$ 5 bis 7, insbesondere 6. Ein besonders geeigneter Ethylenglykolether ist die Verbindung mit $R_1$ = Ethyl, $R_2$ = tert. Butyl und $R_3$ = H. Die Glykolether sind beispielsweise nach dem Prinzip der Williamson-Synthese aus einem Natriumalkoholat und einem Alkylhalogenid zugänglich. Die Ether der Formel

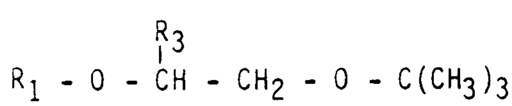

können in einfacher Weise durch Umsetzung des entsprechenden Alkohols

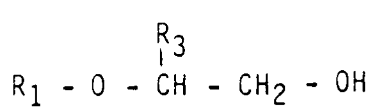

mit Isobuten in Gegenwart eines sauren Ionenaustauschers hergestellt werden.

Der Cokatalysator wird in einem Verhältnis von 2 : 1 bis 30 : 1, insbesondere 2 : 1 bis 15 : 1, bezogen auf die Molzahl des Katalysators eingesetzt. Bei höheren Temperaturen werden im allgemeinen größere Mengen an Cokatalysator benötigt, um die gewünschte Mikrostrukturregelung zu erzielen. Reaktionstemperaturen von 100 °C sollten nicht überschritten werden. Es ist auch möglich, bei steigender oder fallender Temperatur zu arbeiten; jedoch ist in diesem Falle dafür Sorge zu tragen, daß die Mikrostruktur nicht

grundsätzlich verändert wird.

Bei der Herstellung des Blockes A hängt es von dem gewünschten Vinylgruppengehalt ab, wieviel Cokatalysator zugegen sein sollte.

Bei der Herstellung von Block B und gegebenenfalls A kann Styrol als Comonomer zugesetzt werden. Durch geeignete Maßnahmen ist dafür Sorge zu tragen, daß der Gehalt an Polystyrolblöcken 2 Massen-% nicht überschreitet. Ein Verfahren zur Bestimmung des Gehaltes an Polystyrolblöcken ist in dem Standardwerk Houben-Weyl "Methoden der Organischen Chemie", Band 14/1 (1061), Seite 698 angegeben.

Es ist bekannt, daß einige als Cokatalysatoren vorgeschlagene Verbindungen die Eigenschaft haben, die Ausbildung von Polystyrolblöcken zu unterdrücken. Die gleiche Eigenschaft haben Verbindungen, die als Randomizer bezeichnet werden und meist Kaliumsalze von Alkoholaten sowie langkettigen organischen Carbon- und Sulfonsäuren sind. Sofern die Randomizerwirkung der Cokatalysatoren nicht ausreichend ist, können Randomizer zugesetzt werden.

Geeignete Kupplungsmittel sind Polyepoxide wie epoxidiertes Leinsamenöl, Polyisocyanate, Polyketone wie 1,3,6-Hexantrion, Polyanhydride wie beispielsweise das Dianhydrid der Pyromellithsäure und Dicarbonsäureester wie Adipinsäuredimethylester. Besonders geeignet sind

- die Tetrahalogenide der Elemente Si, Ge, Sn und Pb, insbesondere $SiCl_4$.
- organische Verbindungen der allgemeinen Formel $R_n/SiHal_3/_n$, mit n = 1 bis 6, insbesondere n = 1 und 2. Hierbei ist R ein n-wertiger organischer Rest, beispielsweise ein aliphatischer, cycloaliphatischer oder aromatischer Rest mit 6 bis 16 C-Atomen. Beispielhaft seien 1,2,4-Tris(2-trichlorsilylethyl)-cyclohexan, 1,8-Bis(trichlorsilyl)-octan und 1-(Trichlorsilyl)-octan genannt.
- organische Verbindungen, die mindestens einmal die Gruppierung > $SiHal_2$ enthalten, wie z. B. Dimethylsilylchlorid.
- Halogensilanwasserstoffe der allgemeinen Formel

  $Si(H)_m(Hal)_{4-m}$ mit $3 \geqq m \geqq 1$.

- Di- und Trivinylbenzole, wie z. B. 1,4-Divinylbenzol.

Als Kupplungsmittel wird Divinylbenzol bevorzugt.

Das Verfahren kann sowohl diskontinuierlich wie kontinuierlich betrieben werden.

Mit Hilfe der tan Delta-Kurve ist der Fachmann in der Lage, durch Variation der Reaktionsbedingungen Blockcopolymerisate herzustellen, die zu Reifenlaufflächen mit den gewünschten Eigenschaftskombinationen verarbeitet werden können.

Die erhaltenen amorphen Polymerisate werden, wenn sie zu Vulkanisaten verarbeitet werden sollen, mit aktiven, verstärkenden Füllstoffen, einem Vulkanisationsmittel und üblichen Zusatzstoffen gemischt. Im allgemeinen ist es erforderlich, diese Vermischung unter Einwirkung von Scherkräften durchzuführen.

Massen, welche zur Herstellung von Reifenlaufflächen bestimmt sind, werden im allgemeinen zu Rohlaufstreifen geformt. Bei der Homogenisierung und Formgebung, die beispielsweise in einem Extruder erfolgen kann, werden die Bedingungen von Temperatur und Zeit so gewählt, daß keine Vulkanisation eintritt.

Die Kautschukkomponente in den vulkanisierbaren Massen besteht vorzugsweise zu mehr als 70 und insbesondere zu 100 Massen-% aus einem Blockcopolymerisat der Erfindung und zu 0 bis 30 Massen-% aus einem bekannten, amorphen Allzweckkautschuk wie z. B. Styrol-Butadien-Kautschuk, 1,4-cis-Polybutadien, 1,4-cis-Polyisopren und Naturkautschuk. Sofern dies erwünscht sein sollte, kann der Anteil der Allzweckkautschuke auch wesentlich erhöht werden.

Aktive, verstärkende Füllstoffe sind beispielsweise Reifenlaufflächenruße unterschiedlicher Aktivität, gegebenenfalls mit Silan-Haftvermittlern behandelte, hochdisperse Kieselsäuren und ihre Gemische.

Übliche Vulkanisationsmittel enthalten z. B. Schwefel in Kombination mit Beschleunigern. Die Menge des Vulkanisationsmittels richtet sich nach den übrigen Komponenten in der vulkanisierbaren Masse und kann durch einfache, orientierende Versuche ermittelt werden.

Als Zusatzstoffe können die in der Kautschuktechnik üblichen Weichmacheröle, bevorzugt aromatische, aliphatische und naphthenische Kohlenwasserstoffe, sowie übliche Hilfsmittel, wie beispielsweise Zinkoxid, Stearinsäue, Harzsäuren, Alterungsschutzmittel und Ozonschutzwachse, in üblichen Mengen eingesetzt werden.

Die erfindungsgemäßen Blockcopolymerisate eignen sich zur Herstellung der Laufflächen von PKW- und LKW-Reifen und zwar sowohl zur Herstellung von Neureifen als auch zur Runderneuerung von Altreifen.

Die Reifenlaufflächen zeichnen sich insbesondere durch folgende vorteilhaften Eigenschaften aus:

- hoher Naßrutschwiderstand
- hoher Abriebwiderstand
- niedriger Rollwiderstand und daher geringer Treibstoffverbrauch
- hohe Verschleißfestigkeit
- Allwettereigenschaften

Als Lösemittel wurde ein Kohlenwasserstoffgemisch eingesetzt, das zu etwa 50 % aus Hexan bestand. Weitere Bestandteile dieses hydrierten $C_6$-Schnittes waren insbesondere Pentan, Heptan und Oktan sowie deren Isomere. Das Lösemitel wurde über einem Molekularsieb der Porenweite 0,4 nm getrocknet, so daß der Wasseranteil unter 10 ppm gesenkt wurde, und anschließend mit $N_2$ gestrippt.

Die organische Lithiumverbindung war n-Butyllithium, die, wenn nicht anders angegeben, in Form einer 20 Gew.-prozentigen Lösung in Hexan zur Anwendung kam.

Die Monomeren Isopren und Styrol wurden vor ihrem Einsatz 24 Stunden über Calciumhydrid unter Rückfluß gekocht, abdestilliert und mit n-Butyllithium in Gegenwart von o-Phenanthrolin austitriert.

Die Glykolether wurden über Calciumhydrid destilliert und anschließend mit n-Butyllithium in Gegenwart von o-Phenanthrolin austitriert.

Das Divinylbenzol (DVB) stellt ein Gemisch des m- und p-Divinylbenzols dar und wurde in Form einer 64prozentigen Lösung in Hexan eingesetzt. Die Bestimmung des Kupplungsumsatzes erfolgte, indem man den Feststoffgehalt nach Abdampfen des Lösemittels und der Monomeren bestimmte.

Die tan Delta-Kurven wurden mit einem Torsionspendel nach Schmieder-Wolf gemäß DIN 53 520 aufgenommen.

Als Kupplungsausbeute wird der Prozentanteil an Kautschuk angesehen, der nach der Umsetzung mit einem Kupplungsmittel eine sternförmige Struktur aufweist und sich gegenüber dem ungekuppelten Kautschuk durch ein erheblich höheres Molekulargewicht auszeichnet. Die Bestimmung erfolgt mit der GPC-Analyse, wobei Tetrahydrofuran als Lösemittel und Polystyrol als Säulenmaterial eingesetzt wird. Die Polymerisate werden mit einem Lichtstreuungsdetektor charakterisiert. Zu diesem Zweck werden dem Reaktor vor Zugabe des Kupplungsmittels und zu Ende der Reaktion Proben entnommen. Die Defo-Härte (DH) und die Defo-Elastizität (DE) wurden nach den üblichen Meßmethoden bestimmt (DIN 53 514).

Teile bedeuten Massenteile, Prozent (%) Massen-%.

Vergleichsbeispiel A

In einem mit trockenem Stickstoff gespülten V2A-Rührautoklaven wurden 654 Teile Hexan und 67 Teile 1,3-Butadien vorgelegt. Dann wurde auf 50 °C erhitzt und mit einer 5-prozentigen Lösung von n-Butyllithium in Hexan unter thermoelektrischer Kontrolle titriert. Die Polymerisation wurde bei 50 °C durch Zugabe von 0,066 Teilen n-Butyllithium gestartet. Die Temperatur wurde durch Kühlung konstant gehalten. Nach 2 Stunden, als das Butadien umgesetzt war, wurden bei 50 °C 33 Teile Isopren und 0,83 Teile 1-Ethoxy-2-tert.-butoxy-ethan zugesetzt und in 60 Minuten auspolymerisiert. Danach wurden bei 50 °C 1,37 Teile DVB zugesetzt. Nach einer Stunde bei 50 °C wurde auf Raumtemperatur abgekühlt und 0,5 Teile 2,2'-Methylen-bis-(4-methyl-6-tert.-butylphenol) zugegeben. Der erhaltene Kautschuk wurde mit einem Gemisch aus Isopropanol und Methanol im Volumenverhältnis 80 : 20 gefällt und 24 Stunden bei 70 °C im Umlufttrockenschrank getrocknet.

Beispiel 1

In einem mit trockenem Stickstoff gespülten V2A-Rührautoklaven wurden 654 Teile Hexan und 67 Teile 1,3-Butadien vorgelegt. Dann wurde auf 50 °C erhitzt und mit einer 5-prozentigen Lösung von n-Butyllithium in Hexan unter thermoelektrischer Kontrolle titriert. Die Polymerisation wurde bei 50 °C durch Zugabe von 0,048 Teilen n-Butyllithium gestartet. Die Temperatur wurde durch Kühlung konstant gehalten. Nach 2 Stunden, als das Butadien zu 90 % umgesetzt war, wurden bei 50 °C 33 Teile Isopren, 0,83 Teile 1-Ethoxy-2-tert.-butoxy-ethan und 0,030 Teile n-Butyllithium zugesetzt und in 90 Minuten auspolymerisiert. Danach wurden bei 50 °C 1,59 Teile DVB zugesetzt. Nach einer Stunde bei 50 °C wurde auf Raumtemperatur abgekühlt und 0,5 Teile 2,2'-Methylen-bis-(4-methyl-6-tert.-butylphenol) zugegeben. Der erhaltene Kautschuk wurde mit einem Gemisch aus Isopropanol und Methanol im Volumenverhältnis 80 : 20 gefällt und 24 Stunden bei 70 °C im Umlufttrockenschrank getrocknet.

Beispiel 2

In einem mit trockenem Stickstoff gespülten V2A-Rührautoklaven wurden 594 Teile Hexan und 61 Teile 1,3-Butadien vorgelegt. Dann wurde auf 50 °C erhitzt und mit einer 5-prozentigen Lösung von n-Butyllithium in Hexan unter thermoelektrischer Kontrolle titriert. Die Polymerisation wurde bei 50 °C durch Zugabe von 0,044 Teilen n-Butyllithium gestartet. Die Temperatur wurde durch Kühlung konstant gehalten. Nach 2 Stunden, als das Butadien umgesetzt war, wurden bei 50 °C 15 Teile Isopren, 15 Teile Styrol, 9 Teile Butadien-1,3, 0,75 Teile 1-Ethoxy-2-tert.-butoxy-ethan und 0,027 Teile n-Butyllithium zugegeben und 90 Minuten auspolymerisiert. Danach wurden bei 50 °C 1,46 Teile DVB zugesetzt. Nach einer Stunde bei 50 °C wurde auf Raumtemperatur abgekühlt und 0,5 Teile 2,2'-Methylen-bis-(4-methyl-6-tert.-butylphenol) zugegeben. Der erhaltene Kautschuk wurde mit einem Gemisch aus Isopropanol und Methanol im Volumenverhältnis 80 : 20 gefällt und 24 Stunden bei 70 °C im Umlufttrockenschrank getrocknet.

Tabelle

| Zusammensetzung der Blockcopolymerisate | | | | | | |
|---|---|---|---|---|---|---|
| Beispiel | Butadien | | | Isopren | | Styrol |
| | 1,4 trans | 1,4 cis | 1,2 | 3,4 | 1,4 | |
| A | 36 | 27 | 8 | 26 | 3 | - |
| 1 | 35 | 26 | 9 | 26 | 4 | - |
| 2 | 32 | 25 | 11 | 11 | 4 | 17 |

Tabelle

| Makrostruktur der Blockcopolymerisate | | |
|---|---|---|
| Beispiel | U[1)] | K[2)] |
| A | 1,8 | 80 |
| 1 | 2,7 | 60 |
| 2 | 3,0 | 60 |

[1)] U = Uneinheitlichkeit
[2)] K = Kupplungsausbeute

Im Vergleichsbeispiel A wird ein symmetrisches Blockcopolymeres der allgemeinen Formel $(A\text{-}B)_n\text{-}X$ hergestellt. Beispiel 1 beschreibt die Herstellung eines erfindungsgemäßen unsymmetrischen Blockcopolymeren der allgemeinen Formel $(A\text{-}B)_n\text{-}X\text{-}(B)_m$. Beide Blockcopolymeren wurden aus den gleichen Monomergemischen erhalten. Die Abbildung zeigt auf, daß die tan Delta-Kurve der erfindungsgemäßen unsymmetrischen Blockcopolymeren wesentlich breiter ist als die der entsprechenden symmetrischen Blockcopolymeren.

**Patentansprüche**

**1.** Ungesättigte, elastomere, asymmetrisch gekuppelte Blockcopolymere der allgemeinen Formel $(A\text{-}B)_n$ - X - $(B)_m$, auf Basis von Butadien und gegebenenfalls Isopren, wobei
- A und B unterschiedliche, elastomere Blöcke sind,
- X der Rest eines polyfunktionellen Kupplungsmittels ist und
- für m und n folgende Beziehungen gelten:

$(m - n) \geqq 0$
$3 \leqq (m + n) \leqq 25$

**2.** Blockcopolymere gemäß Anspruch 1,
dadurch gekennzeichnet,

daß sie zu
40 - 90 % aus Butadien,
0 - 40 % aus Isopren und
0 - 30 % aus Styrol
bestehen.

**3.** Blockcopolymere gemäß den Ansprüchen 1 und 2,
dadurch gekennzeichnet,
daß die Blöcke A 40 bis 80 % aller Blöcke und die Blöcke B 60 bis 20 % aller Blöcke ausmachen.

**4.** Blockcopolymere gemäß den Ansprüchen 1 bis 3,
dadurch gekennzeichnet,
daß
- die Blöcke A ausschließlich aus Butadieneinheiten mit einem Gehalt an gleichmäßig verteilten Vinylgruppen von 8 bis 60 % bestehen und
- die Blöcke B
zu 0 bis 60 % aus Butadieneinheiten,
zu mindestens 10 % aus Isopreneinheiten und
zu maximal 45 % aus Styroleinheiten
bestehen und die Dieneinheiten einen Vinylgehalt von 75 bis 90 % aufweisen.

**5.** Verfahren zur Herstellung der Blockcopolymeren gemäß den Ansprüchen 1 bis 4 durch Polymerisation der Monomeren in einem inerten organischen Lösemittel in Gegenwart einer monofunktionellen Li-Verbindung,
dadurch gekennzeichnet,
daß man zunächst unter Katalysatorzugabe den Block A herstellt, anschließend nach erneuter Katalysator- und Monomerzugabe in Gegenwart eines geeigneten Cokatalysators den Block B herstellt und schließlich eine Kupplung mit einem polyfunktionellen Kupplungsmittel durchführt.

**Claims**

**1.** An unsaturated elastomeric asymmetrically coupled block copolymer of the general formula $(A\text{-}B)_n - X - (B)_m$ based on butadiene and, if desired, isoprene, where
- A and B are different elastomeric blocks,
- X is the radical of a polyfunctional coupling agent and
- m and n have the following relationships:

$(m - n) \geqq$ zero
$3 \leqq (m + n) \leqq 25$

**2.** A block copolymer according to claim 1,
characterized in that it is composed of
40 - 90 % of butadiene,
0 - 40 % of isoprene and
0 - 30 % of styrene.

**3.** A block copolymer according to either of claims 1 and 2, characterized in that the blocks A make up from 40 to 80 % of all blocks and the blocks B make up from 60 to 20 % of all blocks.

**4.** A block copolymer according to any of claims 1 to 3, characterized in that
- the blocks A are composed exclusively of butadiene units containing from 8 to 60 % of uniformly distributed vinyl groups and
- the blocks B are composed of
from 0 to 60 % of butadiene units,
at least 10 % of isoprene units and
at most 45 % of styrene units
and the diene units have a vinyl content from 75 to 90 %.

5. A process for preparing the block copolymer according to any of claims 1 to 4, by polymerization of the monomers in an inert organic solvent in the presence of a monofunctional lithium compound, characterized in that first the block A is prepared with the addition of catalyst, then, after renewed catalyst and monomer addition, block B is prepared in the presence of a suitable cocatalyst, and finally coupling is carried out using a polyfunctional coupling agent.

**Revendications**

1. Copolymères en blocs insaturés, élastomères, à copulation asymétrique, répondant à la formule générale,

$(A\text{-}B)_n - X - (B)_m$ ,

à base de butadiène et éventuellement d'isoprène, formule dans laquelle :
- A et B sont des blocs élastomères différents,
- X est le radical d'un agent de copulation polyfonctionnel et,
- pour m et n on a les relations suivantes :

$(m - n) \geqq 0$
$3 \leqq (m + n) \leqq 25$

2. Les copolymères en blocs selon la revendication 1, caractérisés par le fait qu'ils sont constitués :
pour 40 à 90 % par du butadiène,
pour 0 à 40 % par de l'isoprène, et
pour 0 à 30 % par du styrène.

3. Les copolymères en blocs selon les revendications 1 et 2, caractérisés par le fait que les blocs A forment de 40 à 80 % de tous les blocs et que les blocs B forment de 60 à 20 % de tous les blocs.

4. Les copolymères en blocs selon les revendications 1 à 3, caractérisés par le fait que :
- les blocs A sont constitués exclusivement par des unités butadiène d'une teneur de 8 à 60 % en groupes vinyle uniformément répartis, et que
- les blocs B sont constitués
pour 0 à 60 % par des unités butadiène,
pour 10 % au moins par des unités isoprène, et
pour 45 % au maximum par des unités styrène, et que les unités diéniques présentent une teneur en vinyle de 75 à 90 %.

5. Procédé de préparation des copolymères en blocs selon les revendications 1 à 4, par polymérisation des monomères dans un solvant organique inerte, en présence d'un composé monofonctionnel du lithium,
caractérisé par le fait que l'on prépare d'abord le bloc A en ajoutant un catalyseur, que l'on prépare ensuite le bloc B, après avoir à nouveau ajouté du catalyseur et du monomère, en présence d'un co-catalyseur convenable, et que l'on effectue finalement une copulation avec un agent de copulation polyfonctionnel.

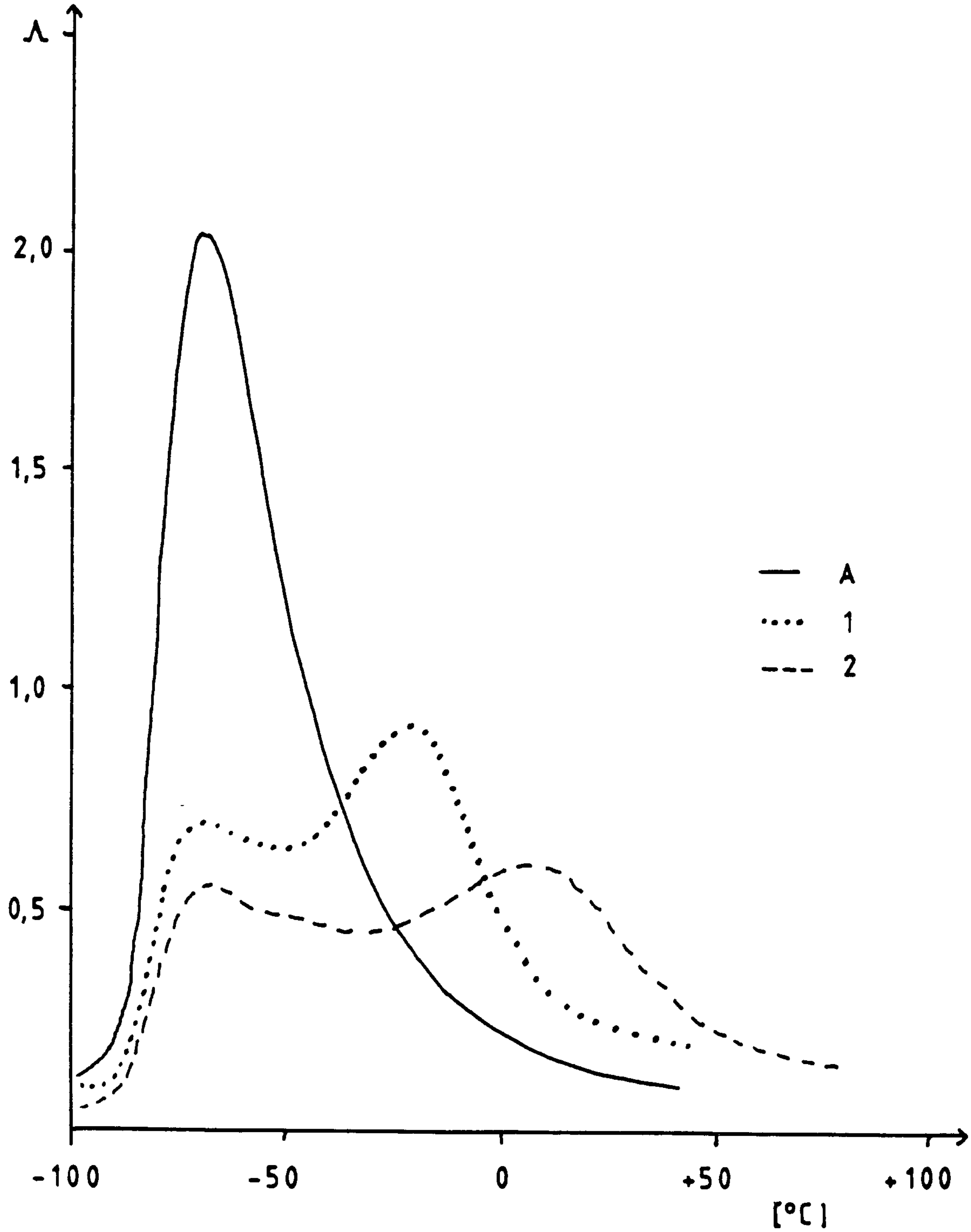


Abb. 1